# EUROPÄISCHE PATENTSCHRIFT

(11) **EP 2 124 320 B1**
(45) Veröffentlichungstag und Bekanntmachung des Hinweises auf die Patenterteilung: **31.05.2017**
(21) Anmeldenummer: 09006254.8
(22) Anmeldetag: 08.05.2009
(51) Int. Cl.: H02K 11/00, H02K 3/52, H02K 11/25

(54) **Elektromotor mit Sensor und/oder Thermoschutzschalter**
Electric motor with sensor and/or thermal protection switch
Moteur électrique doté d'un capteur et/ou d'un commutateur de protection thermique

(30) Priorität: 20.05.2008 DE 102008024378
(43) Veröffentlichungstag der Anmeldung: 25.11.2009
(73) Patentinhaber: Miele & Cie. KG, 33332 Gütersloh (DE)
(72) Erfinder: Esch, Günter, 53937 Schleiden (DE); Hilger, Andreas, 53925 Kall (DE); Merten, Hans Peter, 53520 Senscheid (DE)

(56) Entgegenhaltungen:
- EP-A1- 0 862 259
- DE-A1- 2 752 130
- DE-A1- 10 134 123
- DE-A1-102005 060 358
- US-A1- 2003 201 868
- US-A1- 2004 256 936
- US-A1- 2005 226 308

## Beschreibung

Die Erfindung betrifft einen Elektromotor mit Einzelpolwicklungen mit mindestens zwei ausgeprägten Statorpolen, die jeweils eine auf einem Wickelkörper aufgenommene Wicklung tragen, sowie mit jeweils einem der Statorwicklung zugeordneten Thermoschutzschalter oder Sensor, welcher im Wickelkörper in einer vorbestimmten Lage der jeweiligen Wicklung fixiert ist und an dieser im Wesentlichen bündig anliegt.

Um die Statorwicklungen in Elektromotoren vor einer thermischen Zerstörung zu schützen, sind verschiedene Maßnahmen bekannt. Als zuverlässig hat sich der Einsatz von Thermoschutzschaltern erwiesen, die bei der Überschreitung einer vorgegebenen Grenztemperatur den Motorstrom oder einen Messstrom unterbrechen. Dadurch kann der Motor zuverlässig abgeschaltet werden, bevor Beschädigungen oder ein Durchbrennen der Wicklung oder Isolation stattfindet. So ist aus der DE 101 34 123 A1 ein Elektromotor bekannt, bei dem Sensoren zur Erfassung der Wicklungstemperatur im Isolationskörper für die Statorwicklung integriert sind. Hierbei muss bei der Montage des Motors jeder Sensor einzeln in die vorgesehene Aufnahmeöffnung eingelegt werden, wobei die Anschlussdrähte durch Bohrungen im Wickelkörper hindurch gefädelt werden müssen. Ferner müssen die Sensoren am Wickelkörper befestigt bzw. vorfixiert werden, damit sie sich nach dem Wickeln in der vorgesehenen Position befinden.

Aus der DE 41 42 180 C1 ist ein Elektromotor bekannt, bei dem ein Thermoschutzschalter außenseitig an der Wicklung angebracht ist. Hierbei wird zur Halterung ein federndes Element verwendet, damit der Thermoschutzschalter gegen die Wicklung gepresst werden kann. Bei starken Erschütterungen oder starken mechanischen Einwirkungen auf den Motor kann es vorkommen, dass sich die Halterung löst und der Thermoschutzschalter nicht mehr an die Wicklung gepresst wird, wodurch die Wicklungstemperatur nicht mehr optimal überwacht wird. Ferner müssen bei einer 3-phasigen Wicklung drei einzelne federnde Elemente montiert werden, was einen gewissen Aufwand beinhaltet.

Aus der EP 1 355 406 B1 ist eine einzelne Magnetspule bekannt, die einen Wickelkörper umfasst, der zur Aufnahme eines Halteteils mit einem Thermoschutzschalter ausgebildet ist. Bei einem mehrpoligen Motor müsste für jede Wicklung ein einzelnes Halteteil vorgesehen und montiert werden.

Aus der DE 10 2004 010 956 U1 ist ein mehrteiliger Wickelkörper zur Isolation von Statornuten eines Elektromotors bekannt. Auch aus der DE 10 2006 021 903 oder der US 2006 001 2261 A1 ist ein ähnlicher Wickelkörper bekannt. Diese Wickelkörper sind nicht dazu ausgebildet, ein Halteteil zur ortsfesten Positionierung von Thermoschutzschaltern zu halten.

Der Erfindung stellt sich somit die Aufgabe, bei einfacher Montage eine zuverlässige Anbindung von Sensoren oder Thermoschutzschaltern an die Statorwicklung eines Motors bereitzustellen.

Erfindungsgemäß wird dieses Problem durch einen Motor mit den Merkmalen des Patentanspruchs 1 gelöst. Vorteilhafte Ausgestaltungen und Weiterbildungen der Erfindung ergeben sich aus den nachfolgenden abhängigen Ansprüchen.

Erfindungsgemäß ist der Wickelkörper mehrteilig und zusammensteckbar ausgeführt, so dass dieser auf einfache Weise auf das Statorblechpaket montiert werden kann. Die Thermoschutzschalter sind in einem separaten Halteteil fixiert, welches in den Wickelkörper zur Positionierung der Thermoschutzschalter in den Innenbereich der Wicklungen eingesetzt und befestigt ist. Dadurch wird stets eine sichere Positionierung und Fixierung der Sensoren bzw. Thermoschutzschalter erreicht, bevor der eigentliche Wickelvorgang durchgeführt wird. Während des Wickelvorgangs können sich die Sensoren bzw. Thermoschutzschalter nicht aus dem Halteteil lösen da sie von diesem in der vorbestimmten Position gehalten werden. Ein weiterer Vorteil ist, dass die Sensoren bzw. Thermoschutzschalter vor dem eigentlichen Zusammenbau des Motors in das Halteteil eingesetzt werden können, beispielsweise bei einem Zulieferer, so dass das bestückte Halteteil als Funktionsbaugruppe montiert werden kann. Anstelle von Thermoschutzschaltern können ferner auch Sensoren oder Thermosicherungen oder sonstige Bauteile zur Überwachung der Wicklung verwendet werden.

In einer zweckmäßigen Ausführung umfasst der Wickelkörper ein erstes und ein zweites Wickelkörperteil, welche in Axialrichtung des Motors über das Blechpaket gestülpt und miteinander verbunden werden können, beispielsweise mittels Rastmittel. Das Halteteil ist hierbei an dem ersten Wickelkörperteil mittels Rastmittel befestigt.

In einer zweckmäßigen Weiterbildung ist das Halteteil als Teilkreis in Umfangsrichtung der Anordnung der Statorpole im Motor ausgebildet, wobei die Thermoschutzschalter oder Sensoren in Umfangsrichtung beabstandet im Halteteil positioniert und fixiert sind. Dadurch können in einem einzigen Montageschritt alle Sensoren oder Thermoschalter in die vorgesehene Position gebracht und fixiert werden.

In dieser Ausführung ist es zweckmäßig, dass der erste Wickelkörper Öffnungen im Scheitelbereich des jeweils einem Thermoschutzschalter oder Sensor zugeordneten Statorpols für die zumindest bereichsweise Anlage der Wicklungen an der Oberfläche des Thermoschutzschalters oder Sensors umfasst. Dadurch wird die Positionierung der Sensoren nochmals verbessert und ein guter Kontakt bzw. wärmeleitender Übergang zur Wicklung, die in einem nachfolgenden Fertigungsschritt aufgebracht wird, bereitgestellt.

In einer vorteilhaften Weiterbildung besitzt das Halteteil Führungsmittel für die Anschlussdrähte der Thermoschutzschalter oder Sensoren, so dass die Anschlussdrähte bogenförmig um die Pole im Bereich des Außenumfangs des Motors geführt sind. Dadurch müssen keine nachträglichen Maßnahmen zur Führung und für den sicheren Halt der Drähte vorgenommen werden. Eine Beschädigung der Drähte von Außen ist somit nahezu ausgeschlossen.

Hierzu ist es zweckmäßig, dass die Führungsmittel durch Stege und/oder Kanäle gebildet sind. Insbesondere bei einer Ausführung des Halteteils aus einem isolierenden Kunststoff werden mit den Stegen und Kanälen die Isolationen bzw. Isolationsabstände zwischen den leitenden Bereichen der Anschlussdrähte bereitgestellt.

In einer vorteilhaften Weiterbildung sind die Anschlussdrähte der Thermoschutzschalter oder Sensoren im Bereich der Führungsmittel schaltungstechnisch miteinander verbunden. Dadurch kann die Verschaltung zumindest teilweise bereits in dem Halteteil vorgenommen werden, wodurch die Montage des Motors nochmals vereinfacht wird.

In einer bevorzugten Ausführung sind die Thermoschalter in Reihe geschaltet, so dass bei Aktivierung eines Thermoschalters ein Fehler erkannt wird, der zum sicheren Abschalten aller Wicklungen bzw. Wicklungsstränge führt.

In einer zweckmäßigen Ausführung handelt es sich bei dem Elektromotor um einen Einzelpol-Permanentmagnet-Motor bzw. einen Motor mit einzelpolbewickelten Statoren mit einer 3-phasigen Wicklung. Bei diesem Motor ist für jede Phase oder jeden Strang jeweils ein Thermoschalter vorgesehen, der in der besagten Art und Weise angeordnet und befestigt ist.

Ein Ausführungsbeispiel der Erfindung ist in den Zeichnungen rein schematisch dargestellt und wird nachfolgend näher beschrieben. Es zeigen:
- Fig. 1:: einen Elektromotor in einer teilweisen Schnittdarstellung;
- Fig. 2:: den Wickelkörper mit Statorpolen in einer Explosionsdarstellung;
- Fig. 3:: den Wickelkörper mit befestigtem Halteteil und
- Fig. 4:: das Halteteil mit bestückten Thermoschutzschaltern.

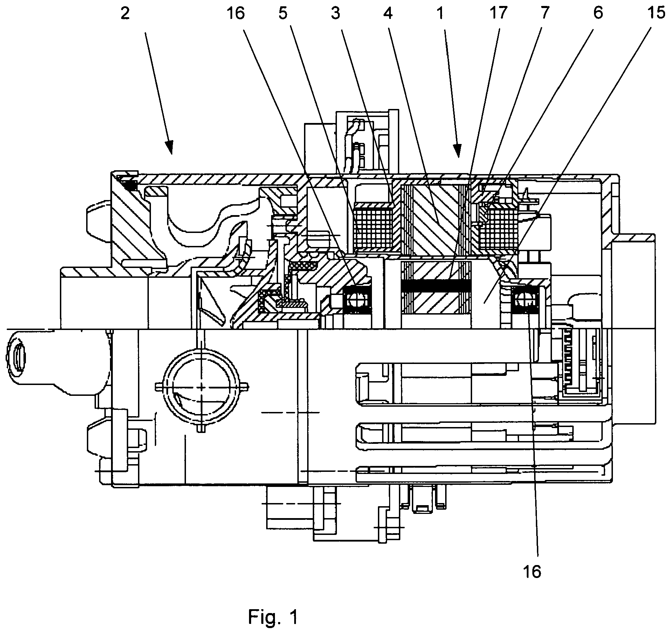

Fig. 1 zeigt den Elektromotor 1 mit angekoppelter Pumpe 2 in einer teilweise geschnittenen Seitenansicht. Der Motor 1 ist in diesem Beispiel als Einzelpol-Permanentmagnet-Motor ausgeführt und umfasst einen in Lagern 16 gelagerten Rotor 15 mit darin angebrachten Permanetmagneten 17. Der Motor 1 umfasst ferner Statorpole 4 mit jeweils einer Wicklung 5, die auf einem Wickelkörper 3.1, 3.2 angeordnet ist. Der Wickelkörper 3.1, 3.2 dient zur Isolation, dem Halt der einzelnen Drahtwindungen und zur Verlegung der Drahtenden der Wicklungen 5. Auf einer zum Statorpol 4 gerichteten Innenseite der Wicklung 5 ist ein Thermoschutzschalter 6.1 angebracht, der mit der Wicklung 5 in thermischen Kontakt steht bzw. diese berührt. Der Thermoschutzschalter 6.1 ist in einem Halteteil 7 fixiert und derart positioniert, dass er durch eine Öffnung 9 im Wickelkörper 3.1 zur bzw. in die Wicklung 5 ragt. Wie in den weitern Figuren dargestellt, besitzt der Elektromotor noch weitere Thermoschutzschalter 6.2, 6.3, die in der Schnittdarstellung nach Fig. 1 nicht zu erkennen sind.

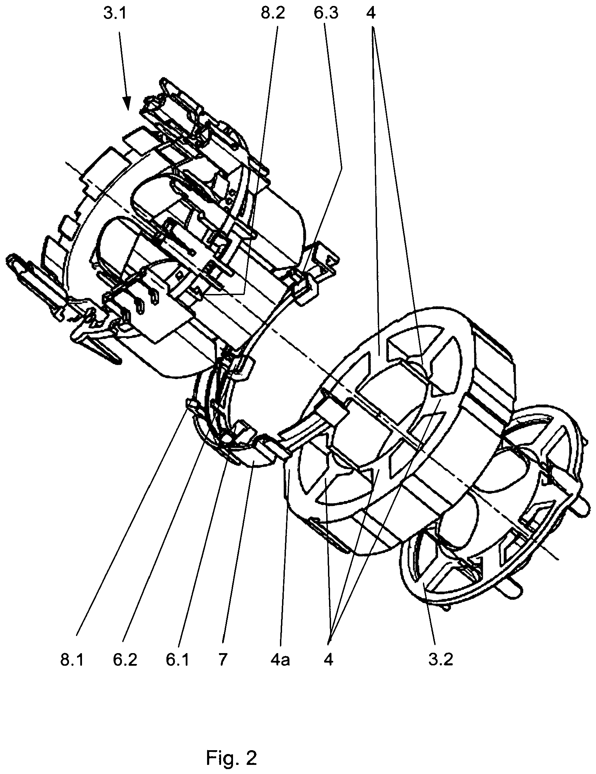

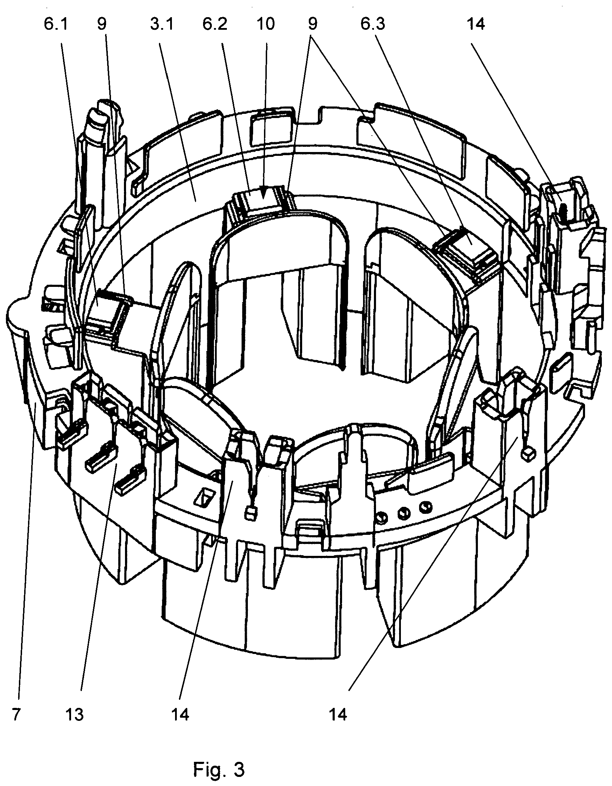

In Fig. 2 ist zu erkennen, dass der Wickelkörper 3 mehrteilig ausgeführt ist und in der gezeigten Ausführung aus einem Wickelkörperteil 3.1 und einem zweiten Wickelkörperteil 3.2 besteht. Das Halteteil 7 ist hierbei bereits mit den Thermoschutzschaltern 6.1, 6.2 und 6.3 bestückt, da für eine 3-phasige Wicklung für jede Phase jeweils ein Thermoschutzschalter vorgesehen ist. Das Halteteil 7 wird mittels Rastmittel 8, wie Rasthaken 8.1 am Halteteil und/oder Rasthaken am Wickelkörperteil 3.1 durch Verrastung befestigt, wobei sich nach dem Verrasten die Thermoschutzschalter 6.1, 6.2, 6.3 an der vorbestimmten Position im ersten Wickelkörperteil 3.1 befinden. Das Halteteil 7 besitzt hierzu zum Inneren des Motors 1 gerichtete Vorsprünge 18, an denen die Thermoschutzschalter 6.1, 6.2, 6.3 fixiert sind. Der erste Wickelkörperteil 3.1 besitzt für jeden Thermoschutzschalter 6.1, 6.2, 6.3 jeweils eine korrespondierende Öffnung 9, durch die der ensprechende Thermoschutzschalter 6.1, 6.2, 6.3 ragt, wenn das bestückte Halteteil 7 an dem ersten Wickelkörperteil 3.1 befestigt ist (Fig. 3). Ferner ist in Fig. 2 zu erkennen, dass das erste Wickelkörperteil 3.1 axial A in das Blechpaket 4a, welches die Statorpole 4 besitzt, eingesteckt und anschließend auf der der Einsteckseite gegenüberliegenden Seite mit dem zweiten Wickelkörperteil 3.2 befestigt wird. Somit ist die Isolation zu den Statorpolen 4 bzw. zum Blechpaket und die Begrenzung für die jeweiligen Wicklungen 5 bereitgestellt, wobei die Thermoschutzschalter 6.1, 6.2, 6.3 für den späteren Vorgang zum Aufbringen der Wicklung 5 in den Öffnungen 9 (Fig. 3) im ersten Wickelkörper 3.1 positioniert sind. Die Wicklung wird auf den Wickelkörper 3 aufgebracht, so dass sich danach die Thermoschutzschalter 6.1, 6.2. 6.3 im Innenbereich der Wicklung 5 bzw. zwischen Statorpol 4 und Wicklung 5 (Fig. 1) befinden.

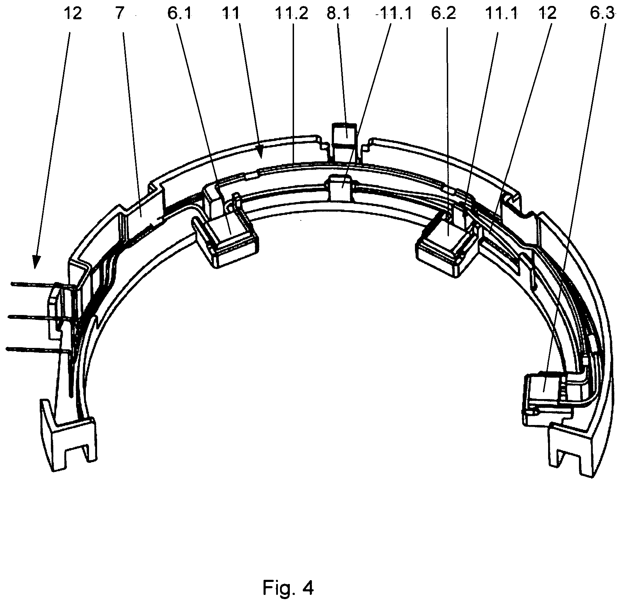

In Fig. 3 ist das erste Wickelkörperteil 3.1 mit daran angebrachtem Halteteil 7 dargestellt. Hierbei ist zu erkennen, dass die Thermoschutzschalter 6.1, 6.2, 6.3 durch Öffnungen 9 hindurch ragen, so dass sie mit der Wicklung im inneren Bereich in Kontakt treten können. Die Thermisch sensiblen Flächen 10 der Thermoschutzschalter sind hierbei zur Wicklung 5 (Fig. 1) gerichtet. Das erste Wickelkörperteil 3.1 besitzt ferner ein Terminal 13, an dem die Anschlussdrähte 12 (Fig. 4) der Thermoschutzschalter 6.1, 6.2, 6.3 enden, wobei mittels Kontaktiermittel, wie beispielsweise Schneidkontakte, der Anschluss für Kabel oder Leitungen bereitgestellt wird. Ferner besitzt das erste Wickelkörperteil 3.1 weitere Terminals 14 für den Anschluss der Drahtenden der Wicklungen 5. In diesem Beispiel besitzt der Motor 1 (Fig. 1) eine 3-phasige Wicklung 5 (Fig. 1), wobei für jede Phase jeweils ein Thermoschutzschalter 6.1, 6.2, 6.3 vorgesehen ist.

Fig. 4 zeigt das mit Thermoschutzschaltern 6.1, 6.2, 6.3 bestückte Halteteil 7, welches Führungsmittel 11 für die Anschlussdrähte 12 besitzt. Als Führungsmittel 11 dienen hierbei Kanäle 11.2, in denen die Drähte 12 eingelegt sind wobei ferner Stege 11.1 angeformt sind, um die die Drähte 12 verlegt sind. Ferner ist zu erkennen, dass die Drähte schaltungstechnisch teilweise miteinander verbunden sind, so dass eine nachträgliche Verschaltung der Drähte 12 entfallen kann. Das Halteteil in Verbindung mit dem Wickelkörper 3 kann ebenso für Sensoren oder Thermossicherungen verwendet werden.

## Patentansprüche

1. Elektromotor (1) mit Einzelpolwicklungen mit mindestens zwei ausgeprägten Statorpolen (4), die jeweils eine auf einem Wickelkörper (3) aufgenommene Wicklung (5) tragen, sowie mit jeweils einem der Statorwicklung (5) zugeordneten Thermoschutzschalter (6.1, 6.2, 6.3) und/oder Sensor, welcher im Wickelkörper (3) in einer vorbestimmten Lage der jeweiligen Wicklung (5) fixiert ist und an dieser im Wesentlichen bündig anliegt,
**dadurch gekennzeichnet,**
**dass** der Wickelkörper (3, 3.1, 3.2) mehrteilig und zusammensteckbar ausgeführt ist, wobei der/die Thermoschutzschalter (6.1, 6.2, 6.3) in einem separaten Halteteil (7) fixiert ist/sind, welches in dem Wickelkörper (3.1) zur Positionierung der Thermoschutzschalter (6.1, 6.2, 6.3) in den Innenbereich der Wicklungen (5) eingesetzt und befestigt ist, wobei das Halteteil (7) als Teilkreis in Umfangsrichtung der Anordnung der Statorpole (4) im Motor (1) ausgebildet ist, wobei die Thermoschutzschalter (6.1, 6.2, 6.3) oder Sensoren in Umfangsrichtung beabstandet im Halteteil (7) positioniert und fixiert sind.

2. Elektromotor nach Anspruch 1,
**dadurch gekennzeichnet,**
**dass** der Wickelkörper (3) ein erstes (3.1) und ein zweites Wickelkörperteil (3.2) umfasst und dass das Halteteil (7) an das erste Wickelkörperteil (3.1) mittels Rastmittel (8.1, 8.2) befestigt ist.

3. Elektromotor nach Anspruch 1,
**dadurch gekennzeichnet,**
**dass** der erste Wickelkörper (3.1) Öffnungen (9) im Scheitelbereich des jeweils einem Thermoschutzschalter (6.1, 6.2, 6.3) oder Sensor zugeordneten Statorpols (4) für die zumindest bereichsweise Anlage der Wicklungen (5) an der Oberfläche (10) des Thermoschutzschalters (6.1, 6.2, 6.3) oder Sensors umfasst.

4. Elektromotor nach Anspruch 1,
**dadurch gekennzeichnet,**
**dass** das Halteteil (7) Führungsmittel (11) für die Anschlussdrähte (12) der Thermoschutzschalter (6.1, 6.2, 6.3) oder Sensoren besitzt, so dass die Anschlussdrähte (12) bogenförmig um die Pole (4) im Bereich des Außenumfangs des Motors (1) geführt sind.

5. Elektromotor nach Anspruch 3,
**dadurch gekennzeichnet,**
**dass** die Führungsmittel (11) durch Stege (11.1) und/oder Kanäle (11.2) gebildet sind.

6. Elektromotor nach Anspruch 4,
**dadurch gekennzeichnet,**
**dass** die Anschlussdrähte (12) der Thermoschutzschalter (6.1, 6.2, 6.3) oder Sensoren im Bereich der Führungsmittel (11) schaltungstechnisch miteinander verbunden sind.

7. Elektromotor nach Anspruch 6,
**dadurch gekennzeichnet,**
**dass** die Thermoschalter (6.1, 6.2, 6.3) in Reihe geschaltet sind.

8. Elektromotor nach Anspruch 1,
**dadurch gekennzeichnet,**
**dass** der Motor (1) ein Einzelpol-Permanentmagnet-Motor mit einer 3-phasigen Wicklung (5) ist.

## Claims

1. Electric motor (1) comprising unipolar windings having at least two distinct stator poles (4) that each support a winding (5) received on a winding form (3), and each having a thermal protection switch (6.1, 6.2, 6.3) and/or a sensor that is associated with the stator winding (5), is fixed in the winding form (3) in a predetermined position of the relevant winding (5), and rests substantially flush thereon,
**characterised in that**
the winding form (3, 3.1, 3.2) is formed in a plurality of parts and can be put together,
the thermal protection switch or thermal protection switches (6.1, 6.2, 6.3) being fixed in a separate retaining part (7) that is inserted and fastened in the winding form (3.1) in order to position the thermal protection switch (6.1, 6.2, 6.3) in the inner region of the windings (5), the retaining part (7) being designed as a partial circle in the circumferential direction of the arrangement of the stator poles (4) in the motor (1), the thermal protection switches (6.1, 6.2, 6.3) or sensors being positioned and fixed in the retaining part (7) so as to be spaced apart in the circumferential direction.

2. Electric motor according to claim 1,
**characterised in that**
the winding form (3) comprises a first winding form part (3.1) and a second winding form part (3.2), and **in that** the retaining part (7) is fastened to the first winding form part (3.1) by means of latching means (8.1, 8.2).

3. Electric motor according to claim 1,
**characterised in that**
the first winding form (3.1) comprises openings (9) in the apex region of the stator pole (4), which is associated with a particular thermal protection switch (6.1, 6.2, 6.3) or sensor, in order for the windings (5) to abut the surface (10) of the thermal protection switch (6.1, 6.2, 6.3) or sensor at least in regions.

4. Electric motor according to claim 1,
**characterised in that**
the retaining part (7) has guide means (11) for the connection wires (12) of the thermal protection switches (6.1, 6.2, 6.3) or sensors such that the connection wires (12) are guided in a curved manner around the poles (4) in the region of the outer circumference of the motor (1).

5. Electric motor according to claim 3,
**characterised in that**
the guide means (11) are formed by fins (11.1) and/or channels (11.2).

6. Electric motor according to claim 4,
**characterised in that**
the connection wires (12) of the thermal protection switches (6.1, 6.2, 6.3) or sensors are interconnected by circuitry in the region of the guide means (11).

7. Electric motor according to claim 6,
**characterised in that**
the thermal switches (6.1, 6.2, 6.3) are connected in series.

8. Electric motor according to claim 1,
**characterised in that**
the motor (1) is a unipolar permanent magnet motor having a three-phase winding (5).

## Revendications

1. Moteur électrique (1) avec des enroulements unipolaires avec au moins deux pôles de stator (4) distincts qui portent respectivement un enroulement (5) logé sur un corps de bobinage (3), ainsi qu'avec respectivement un disjoncteur thermique (6.1, 6.2, 6.3) et/ou un capteur, affecté à l'enroulement (5) de stator, qui est bloqué dans le corps de bobinage (3) dans une position prédéfinie de l'enroulement (5) respectif et est essentiellement placé en affleurement contre cet enroulement,
**caractérisé en ce que**
le corps de bobinage (3, 3.1, 3.2) est réalisé en plusieurs parties et de façon à pouvoir être assemblé par enfichage, dans lequel le/les disjoncteurs thermiques (6.1, 6.2, 6.3) est/sont bloqué(s) dans une partie de retenue (7) séparée qui est introduite et fixée dans le corps de bobinage (3.1) pour le positionnement des disjoncteurs thermiques (6.1, 6.2, 6.3) dans la zone intérieure des enroulements (5), dans lequel la partie de retenue (7) est constituée en tant que cercle partiel dans la direction circonférentielle de l'agencement des pôles de stator (4) dans le moteur (1), dans lequel les disjoncteurs thermiques (6.1, 6.2, 6.3) ou capteurs sont positionnés et bloqués dans la partie de retenue (7) de façon espacée dans la direction circonférentielle.

2. Moteur électrique selon la revendication 1,
**caractérisé en ce que**
le corps de bobinage (3) comprend une première partie de corps de bobinage (3.1) et une deuxième partie de corps de bobinage (3.2), et **en ce que** la partie de retenue (7) est fixée à la première partie de corps de bobinage (3.1) au moyen de moyens d'encliquetage (8.1,8.2).

3. Moteur électrique selon la revendication 1,
**caractérisé en ce que**
le premier corps de bobinage (3.1) comprend des ouvertures (9) dans la zone de sommet du pôle de stator (4) affecté respectivement à un disjoncteur thermique (6.1, 6.2, 6.3) ou capteur pour la pose, au moins par tronçons, des enroulements (5) sur la surface (10) du disjoncteur thermique (6.1, 6.2, 6.3) ou capteur.

4. Moteur électrique selon la revendication 1,
**caractérisé en ce que**
la partie de retenue (7) possède des moyens de guidage (11) pour les fils de connexion (12) des disjoncteurs thermiques (6.1, 6.2, 6.3) ou capteurs de telle sorte que les fils de connexion (12) sont guidés sous forme arquée autour des pôles (4) dans la zone de la circonférence extérieure du moteur (1).

5. Moteur électrique selon la revendication 3,
**caractérisé en ce que**
les moyens de guidage (11) sont formés de barrettes (11.1) et/ou de canaux (11.2).

6. Moteur électrique selon la revendication 4,
**caractérisé en ce que**
les fils de connexion (12) des disjoncteurs thermiques (6.1, 6.2, 6.3) ou capteurs sont raccordés les uns aux autres par raccordement de circuit dans la zone des moyens de guidage (11).

7. Moteur électrique selon la revendication 6,
**caractérisé en ce que**
les disjoncteurs thermiques (6.1, 6.2, 6.3) sont montés en série.

8. Moteur électrique selon la revendication 1,
**caractérisé en ce que**
le moteur (1) est un moteur à aimant permanent unipolaire avec un enroulement (5) triphasé.
